# EUROPÄISCHE PATENTSCHRIFT

(11) **EP 3 722 244 B1**
(45) Veröffentlichungstag und Bekanntmachung des Hinweises auf die Patenterteilung: **05.01.2022**
(21) Anmeldenummer: 20150309.1
(22) Anmeldetag: 06.01.2020
(51) Int. Cl.: B66C 1/66, F16G 15/08

(54) **WIRBELRINGSCHRAUBE**
VERTEBRAL SCREW
ANNEAU DE LEVAGE PIVOTANT

(30) Priorität: 13.02.2019 DE 202019100823 U
(43) Veröffentlichungstag der Anmeldung: 14.10.2020
(73) Patentinhaber: Thiele GmbH & Co. KG, 58640 Iserlohn (DE)
(72) Erfinder: Norpoth, Bernhard, 45309 Essen (DE)
(74) Vertreter: Osterhoff, Utz

(56) Entgegenhaltungen:
- DE-U1-202005 011 967

## Beschreibung

Die vorliegende Erfindung betrifft eine Ringschraube zum Befestigen an einer zu hebenden Last oder einer Ladefläche gemäß den Merkmalen im Oberbegriff von Anspruch 1.

Aus dem Stand der Technik sind Ringschrauben bekannt, welche auch als Anschlagpunkt bzw. im vorliegenden Fall als Wirbelringschraube bezeichnet werden. Solche Ringschrauben weisen einen Ringkörper bzw. einen Ösenkörper auf, in welchen ein Haken oder ein sonstiges Hebe-, Zug- oder Zurrmittel einsetzbar ist. Eine Ringschraube ist zumeist an einer zu hebenden Last bspw. an einem Container oder Ähnlichem festgelegt. Muss nunmehr die Last angehoben werden, kann der Ringkörper entsprechend gedreht und/oder verschwenkt werden, um in optimaler Wirkrichtung bzw. Kraftleitungsrichtung mit dem Hebe-, Zug- oder Zurrmittel zu stehen.

Aus dem Stand der Technik sind solche Ringschrauben bekannt, bspw. aus der DE 20 2005 011 967 U1.

Hierbei ist ein Schraubbolzen bekannt, welcher einen tellerförmigen Kopfabschnitt aufweist. Ein Ringkörper ist unterteilt in einen Ösenabschnitt, sowie einen darunter befindlichen Koppelabschnitt. Der Ringkörper weist zwei gegenüberliegende, aufeinander zu zeigende Zapfen auf, welche schwenkbar in Ausnehmungen der Lagerscheibe angeordnet sind. Der Ringkörper ist somit um die Hochachse des Schraubbolzens drehbar gelagert. Der Ringkörper kann ferner um eine Achse, orthogonal zur Hochachse des Schraubbolzens verschwenkt werden.

Ferner ist aus der DE 699 27 493 T2 eine solche Ringschraube bekannt.

Aufgabe der vorliegenden Erfindung ist es, ausgehend vom Stand der Technik, eine Ringschraube bereitzustellen die drehbar und schwenkbar gelagert ist, zugleich einen technisch einfachen Aufbau, insbesondere bei der Erstmontage aufweist.

Die Ringschraube ist zum Befestigen an einer zu hebenden Last oder auf einer Ladefläche geeignet. Somit kann auch die Anordnung mit einer Ringschraube unter diesem Schutzbereich verstanden werden. Die Ringschraube selbst weist einen Schraubbolzen und einen an dem Schraubbolzen drehbar und schwenkbar gelagerten Ringkörper auf. Der Ringkörper selbst ist bevorzugt einteilig und werkstoffeinheitlich ausgebildet, insbesondere als Schmiedebauteil.

Der Ringkörper besitzt einen Ösenabschnitt und einen darunter befindlichen Koppelabschnitt. Bevorzugt weist der Ösenabschnitt einen Verbindungssteg auf. Der Koppelabschnitt weist im Wesentlichen zwei Arme auf, wobei im Bereich des Endes der Arme, zwei gegenüberliegende und aufeinander zugerichtete Zapfen angeordnet sind. Mit diesen Zapfen greift der Koppelabschnitt seitlich in Ausnehmungen einer Lagerscheibe ein. Der Ringkörper ist über die Zapfen formschlüssig, jedoch schwenkbar gelagert, um eine Achse die orthogonal zu der Hochachse der Schraubbolzens ausgerichtet ist. Die Lagerscheibe selbst ist wiederum drehbar zu dem Schraubbolzen gelagert.

Nunmehr zeichnet sich die Ringschraube erfindungsgemäß dadurch aus, dass ein einfacher, jedoch effektiver Aufbau das Zusammensetzen der Ringschraube und das spätere Befestigen an einer zu hebenden Last oder auf einer Ladefläche ermöglicht wird. Demnach weist die Lagerscheibe zwei gegenüberliegende Ausnehmungen auf, wobei sich die Ausnehmungen von einer Unterseite der Lagerscheibe herkommend in die Lagerscheibe hinein erstrecken. Die Zapfen können somit von der Unterseite der Lagerscheibe in die Ausnehmungen eingesetzt werden. Um nunmehr eine Verliersicherung zu gewährleisten ist ein äußerer Sicherungsring vorgesehen, der insbesondere als Sprengring in die Unterseite der Lagerscheibe eingesetzt ist. Ein Teil des Sprengrings überdeckt somit die von der Unterseite herkommende Ausnehmung und verhindert, dass der in die Ausnehmung eingeführte Zapfen aus der Ausnehmung wiederum in Richtung Unterseite heraus bewegt wird. Die Zapfen werden somit von den Seiten der Ausnehmungen und im Bereich einer Unterseite von dem äußeren Sicherungsring formschlüssig, jedoch schwenkbar gelagert.

In einer bevorzugten Weiterbildung der Erfindung ist vorgesehen, dass die Lagerscheibe von dem Schraubbolzen durchgriffen ist, wobei die Lagerscheibe jedoch drehbar um den Schraubbolzen gelagert ist. Damit beim Zusammensetzen von Lagerscheibe und Schraubbolzen der Schraubbolzen wiederum verliersicher in der Lagerscheibe gehalten ist, ist ein zweiter innerer Sicherungsring vorgesehen, welcher in eine radial umlaufenden Nut des Schraubbolzens eingesetzt ist. Die Lagerscheibe ist somit formschlüssig zwischen einem tellerförmigen Kopf des Schraubbolzens und dem inneren Sicherungsring gehalten, insbesondere gegen axiales Verschieben. Gleichzeitig ist jedoch die Lagerscheibe drehbar um den Schraubbolzen gelagert. Der innere Sicherungsring ist bevorzugt auch als Sprengring ausgebildet.

Hierzu ist besonders bevorzugt vorgesehen, dass der Schraubbolzen einen Stufenabsatz aufweist zwischen einem oberen Lagerabschnitt und einem darunter befindlichen Gewindeabschnitt. Der Lagerabschnitt ist in axialer Erstreckung größer bzw. länger als die Höhe der Lagerscheibe. Wird somit der Schraubbolzen an einem Untergrund bzw. einer Last festgeschraubt, so wird der Gewindeabschnitt soweit in den Untergrund eingeschraubt bis der Stufenabsatz formschlüssig mit dem Untergrund zur Anlage kommt und ein weiteres Eindrehen verhindert. Dadurch dass der Lagerabschnitt des Schraubbolzens länger ist als die Dicke der Lagerscheibe, wird ein Festziehen der Lagerscheibe vermieden. Die Lagerscheibe hat somit axial ein minimales Spiel bzw. Luft, sodass diese um die Hochachse des Schraubbolzens drehbar gelagert ist. Gleichzeitig wird ein Abstandhalten bzw. eine Verliersicherung durch den inneren Sicherungsring gewährleistet.

Eine alternative Ausgestaltungvariante sieht vor, dass die Lagerscheibe selbst mehrteilig ausgebildet ist. Hierzu weist die Lagerscheibe eine innere Lagerhülse auf. Die innere Lagerhülse bildet gleichzeitig auch den tellerförmigen Kopf aus, um eine äußere Lagerhülse in Radialrichtung zumindest teilweise zu überdecken. Die innere Lagerhülse ist in Axialrichtung länger ausgebildet als eine äußere Lagerhülse. Dies bringt den gleichen zuvor beschriebenen Effekt. Beim Festziehen des Schraubbolzens mit innerer Lagerhülse bleibt somit ein axiales Spiel zu der äußeren Lagerhülse. Die äußere Lagerhülse ist dann drehbar auf der inneren Lagerhülse gelagert. Ein Festziehen der äußeren Lagerhülse wird somit ebenfalls vermieden. In der äußeren Lagerhülse sind die Ausnehmungen zur Aufnahme der Zapfen ausgebildet.

Damit nunmehr die äußere Lagerhülse verliersicher mit der inneren Lagerhülse gekoppelt ist, greift der zweite innere Sicherungsring formschlüssig in eine umlaufende Nut in der inneren Lagerhülse ein. Die äußere Lagerhülse ist somit drehbar um die innere Lagerhülse gelagert und in Axialrichtung durch den Sicherungsring gesichert.

Die jeweilige Lagerscheibe bringt den Vorteil, dass ein handelsüblicher Schraubbolzen verwendet werden kann. Es muss kein Spezialbolzen mit Stufenabsatz und besonderer Kopfgeometrie verwendet werden.

Eine weitere vorteilhafte Ausbildung der vorliegenden Erfindung sieht vor, dass im Bereich der Ausnehmung der Lagerscheibe ein Spannmittel eingesetzt ist, dergestalt, dass eine Spannkraft auf zumindest einen Zapfen des Ringkörpers ausgeübt wird. Dies ermöglicht die Positionierung des Ringkörpers in eine beliebige Montage- bzw. Anschlagstellung. Durch die Spannkraft wird der Ringkörper in dieser Stellung gehalten. Bei Verwendung als Zurrpunkt an Fahrzeugen mindert dies zudem die Lärmbelastung bei Nichtgebrauch, da die Zapfen bzw. der Ringkörper somit nicht klappern können.

Bevorzugt ist von der Ausnehmung sich erstreckend eine Öffnung, insbesondere eine Bohrung durch die Lagerhülse ausgebildet. In der Bohrung ist das Spannmittel bevorzugt in Form einer Schraubendruckfeder angeordnet. Ein Gegenlager erfolgt dann durch den tellerförmigen Kopf des Schraubbolzens und/oder den tellerförmigen Kopf der inneren Lagerhülse, sodass beim Zusammensetzen zunächst die Schraubendruckfedern in die Öffnung eingesetzt werden und im Anschluss daran die Zapfen in die Ausnehmung eingeführt werden, sodass die Schraubendruckfedern auf Vorspannung gehalten sind und gegen die Zapfen drücken. Die Zapfen werden aufgrund des äußeren Sicherungsringes in den Ausnehmungen gehalten.

Weitere Vorteile, Merkmale und Aspekte der vorliegenden Erfindung sind Gegenstand der nachfolgenden Beschreibung. Bevorzugte Ausgestaltungen werden in den schematischen Figuren dargestellt. Diese dienen dem einfachen Verständnis der Erfindung. Es zeigen:
- Figur 1: Eine perspektivische Ansicht einer erfindungsgemäßen Ringschraube,
- Figur 2: eine Unteransicht einer erfindungsgemäßen Ringschraube,
- Figur 3: eine Draufsicht einer erfindungsgemäßen Ringschraube,
- Figur 4 und 5: eine jeweilige Seitenansicht einer erfindungsgemäßen Ringschraube,
- Figur 6: eine Querschnittsansicht einer erfindungsgemäßen Ringschraube gemäß der Schnittlinie A - A aus Figur 3,
- Figur 7 bis 12: eine alternative Ausgestaltungsvariante zu den Figuren1 bis 6.

In den Figuren werden für gleiche oder ähnliche Bauteile dieselben Bezugszeichen verwendet, auch wenn eine wiederholte Beschreibung aus Vereinfachungsgründen entfällt.

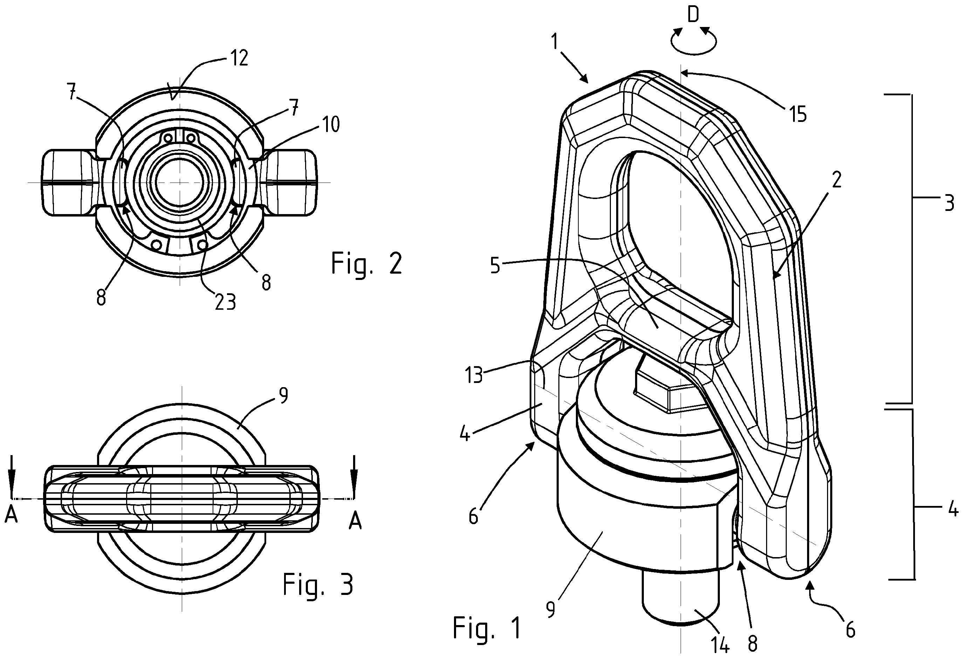

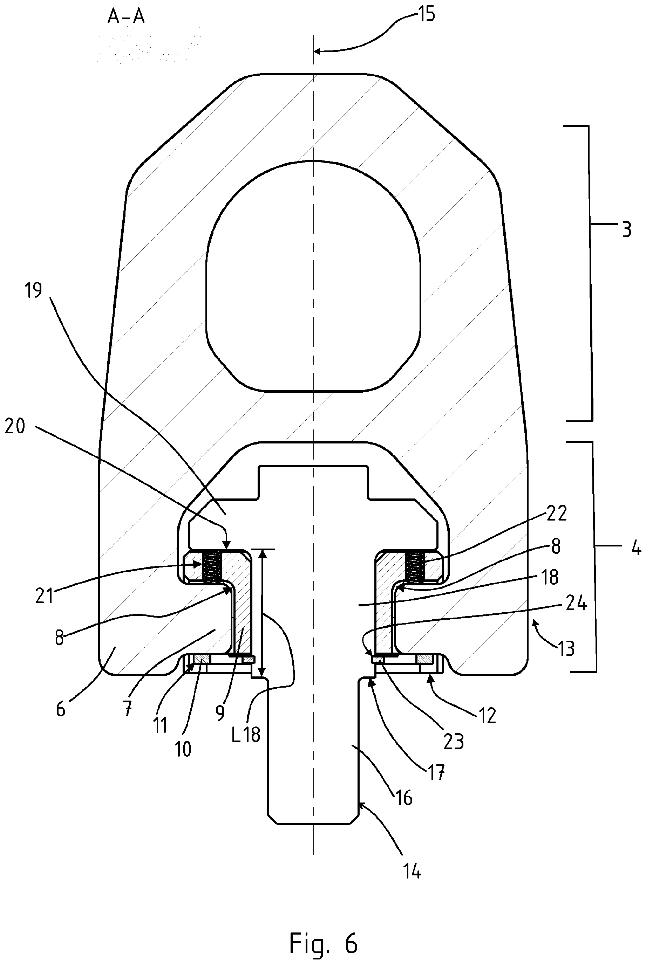

Figur 1 zeigt eine perspektivische Ansicht einer erfindungsgemäßen Ringschraube 1. Die Ringschraube 1 weist dazu einen Ringkörper 2 auf, welcher selbst einen Ösenabschnitt 3 sowie einen darunter befindlichen Koppelabschnitt 4 aufweist. In dem Ösenabschnitt 3 ist ein Verbindungssteg 5 angeordnet, sodass sich insgesamt eine Öse ergibt. Nunmehr ist der Koppelabschnitt 4 durch zwei sich erstreckende Arme 6 ausgebildet, wobei im Bereich eines Ende der Arme 6 zwei gegenüberliegende, aufeinander zu zeigende Zapfen 7 angeordnet sind, was in Figur 6 dargestellt ist. Die Zapfen 7 greifen dabei seitlich in eine jeweilige Ausnehmung 8 einer Lagerscheibe 9 ein. Die Lagerscheibe 9 ist bei dieser ersten Ausgestaltungsvariante einstückig und werkstoffeinheitlich ausgebildet.

Erfindungsgemäß ist nunmehr vorgesehen, dass ein äußerer Sicherungsring 10 in eine Nut 11 im Bereich einer Unterseite 12 der Lagerscheibe 9 formschlüssig eingesetzt ist. Somit werden, wie in Figur 2 dargestellt, die Zapfen 7 in den Ausnehmungen 8 gehalten, sodass der Ringkörper 2 formschlüssig mit der Lagerscheibe 9 verbunden ist. Der äußere Sicherungsring 10 überdeckt von unten die Ausnehmungen 8 und hält somit die Zapfen 7 in den Ausnehmungen 8.

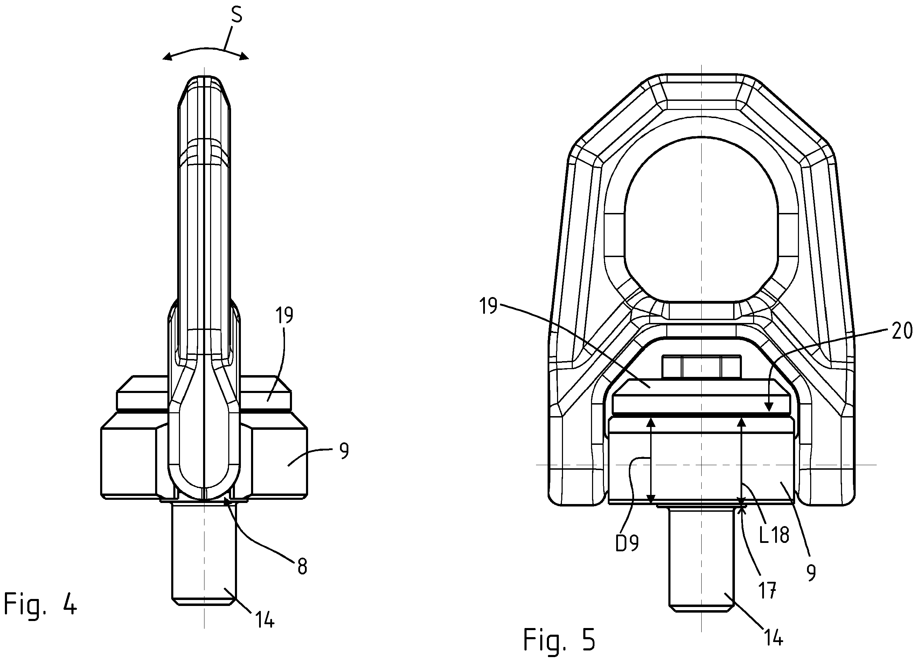

Gleichzeitig ist der Ringkörper 2 um die Achse 13 schwenkbar gelagert, sodass eine in Figur 4 dargestellte Schwenkbewegung S ausgeführt werden kann.

Die Lagerscheibe 9 ist derart an einem Schraubbolzen 14 gelagert, dass eine Drehbewegung D um die Hochachse 15 ausgeführt werden kann. Der Schraubbolzen 14 hat einen Gewindeabschnitt 16, der mit einem Stufenabsatz 17 übergeht in einen Lagerabschnitt 18. Der Lagerabschnitt 18 durchgreift dabei die Lagerscheibe 9, wobei die Lagerscheibe 9 drehbar auf dem Lagerabschnitt 18 gelagert ist. Eine axiale Erstreckung bzw. Länge L18 des Lagerabschnittes 18 ist dabei größer als eine Dicke D9, bzw. Höhe der Lagerscheibe 9, dargestellt in Figur 5. Ist somit die Ringschraube 1 auf einem nicht näher dargestellten Untergrund fixiert, wird hierdurch sichergestellt, dass die Lagerscheibe 9 nicht zwischen einem Kopf 19 des Schraubbolzen 14 und dem Untergrund festgeklemmt wird.

Der Kopf 19 des Schraubbolzens 14 überdeckt in Radialrichtung eine Oberseite 20 der Lagerscheibe 9 zumindest abschnittsweise. Hier ist dann bevorzugt eine Öffnung 21 von der Ausnehmung 8 der Lagerscheibe 9 sich zu dem tellerförmigen Kopf 19 des Schraubbolzens 14 erstreckend ausgebildet. In der Öffnung 21 ist ein Spannmittel 22, hier in Form einer Schraubendruckfeder, angeordnet. Hierdurch wird eine Spannkraft auf den Zapfen 7 ausgeübt, sodass der Ringkörper 2 in verschiedenen Montagepositionen nach Ausführung der Schwenkbewegung S gehalten ist.

Ferner ist dann ein innerer Sicherungsring 23 angeordnet, welcher in eine Nut 24 auf dem Lagerabschnitt 18 des Schraubbolzens 14 eingreift und hier die Lagerscheibe 9 in Axialrichtung formschlüssig, jedoch um die Hochachse 15 drehbar, lagert. Die erfindungsgemäß zusammengesetzte Ringschraube 1 kann somit montiert werden, ohne dass die einzelnen Komponenten auseinanderfallen bzw. sich verlieren.

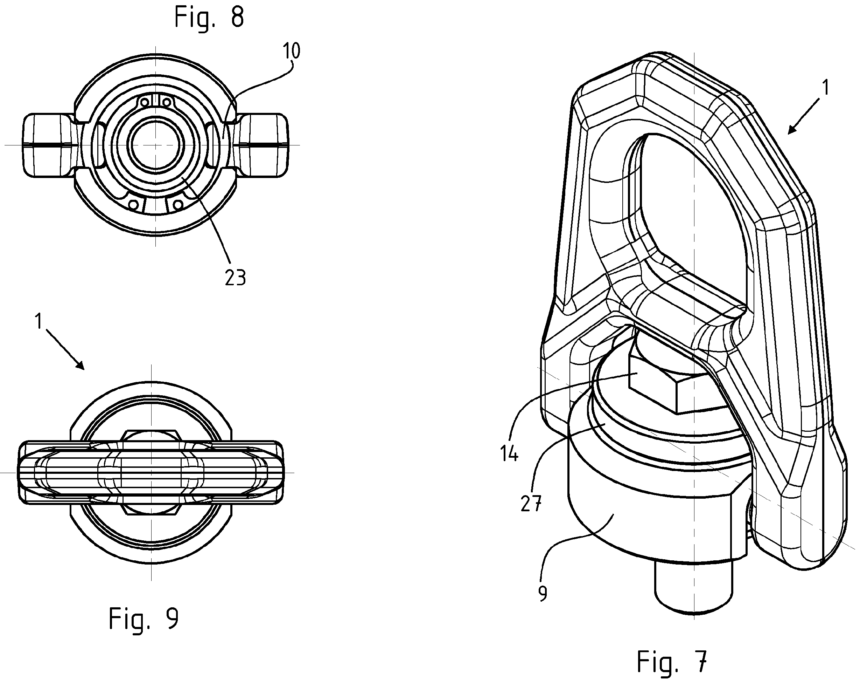

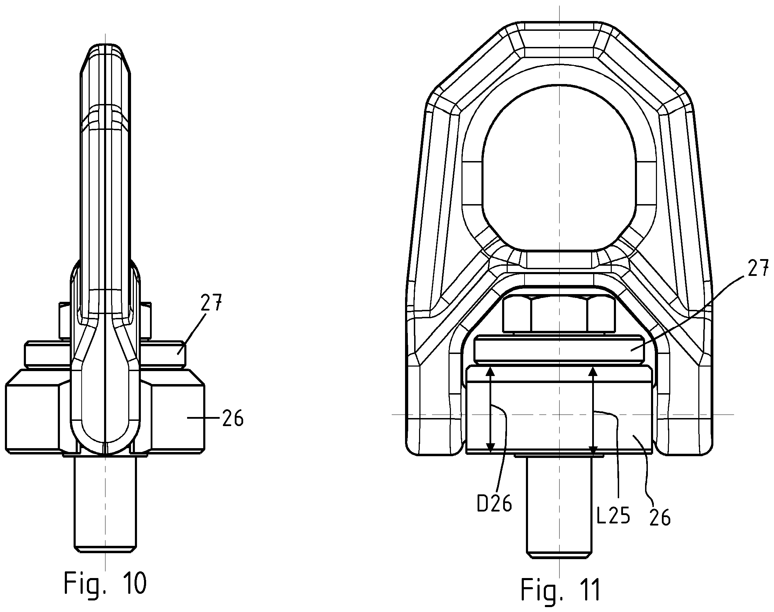

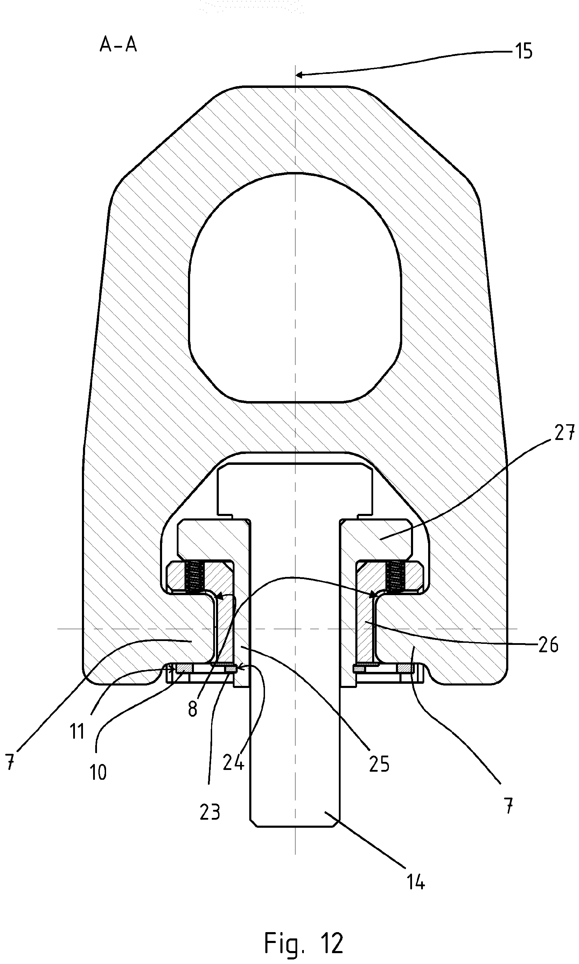

Figur 7 bis Figur 12 zeigen eine zweite analoge Ausgestaltungsvariante zu Figur 1. Als Unterschied ist hierbei zu sehen, dass die Lagerscheibe 9 nicht einstückig und werkstoffeinheitlich ausgebildet ist, sondern mehrteilig, hier zweistückig ausgebildet ist. Insbesondere ist die Lagerscheibe 9 ausgebildet durch eine innere Lagerhülse 25 sowie eine äußere Lagerhülse 26. Die äußere Lagerhülse 26 ist dabei von der inneren Lagerhülse 25 durchgriffen und insbesondere drehbar auf der inneren Lagerhülse 25 gelagert. Die innere Lagerhülse 25 weist dazu ebenfalls einen sich tellerförmig verbreiternden Kopf bzw. Kragen 27 auf, welcher in Radialrichtung die äußere Lagerhülse 26 zumindest teilweise übergreift. Hier können wiederum Spannmittel zum Halten der Zapfen eingesetzt sein.

Damit die äußere Lagerhülse 26 formschlüssig und dadurch auf der inneren Lagerhülse 25 gelagert ist, ist ein innerer Sicherungsring 23 vorgesehen, welcher in einer Nut 24 auf dem Außenmantel der inneren Lagerhülse 25 gelagert ist. Die Zapfen 7 des Ringkörpers 2 sind in Ausnehmungen 8 an der äußeren Lagerhülse 26 eingesetzt und formschlüssig durch den äußeren Sicherungsring 10 gehalten.

Der Vorteil bei dieser Ausführung ist, dass hier ein handelsüblicher Schraubbolzen 14 verwendet werden kann. Dieser muss keinen speziellen Lagerabschnitt 18 aufweisen. Ein vermeintliches Festziehen bzw. Festklemmen wird dadurch vermieden, dass eine axiale Länge L25 eines Lagerabschnittes der inneren Lagerhülse 25 größer ist als die Dicke D26 der äußeren Lagerhülse D26. Auch so kann auf einem nicht näher dargestellten Untergrund vermieden werden, dass bei Festziehen des Schraubbolzens 14 die innere Lagerhülse 25 die äußere Lagerhülse 26 festklemmt. Die äußere Lagerhülse 26 ist somit um die Hochachse 15 drehbar auf der inneren Lagerhülse 25 gelagert. Die Zapfen 7 und damit der Ringkörper 2 sind schwenkbar in den Ausnehmungen 8 gelagert. Der Schraubbolzen 14 kann, nicht näher dargestellt, über Mittel mit der inneren Lagerhülse 25 gekoppelt sein, so dass er nicht aus dieser herausfällt. Dies ist vorteilig, bei Erstmontage der erfindungsgemäßen Ringschraube 1.

### Bezugszeichen:

1 - Ringschraube
2 - Ringkörper
3 - Ösenabschnitt
4 - Koppelabschnitt
5 - Verbindungssteg
6 - Arm
7 - Zapfen
8 - Ausnehmung
9 - Lagerscheibe
10 - äußerer Sicherungsring
11 - Nut
12 - Unterseite zu 9
13 - Achse
14 - Schraubbolzen
15 - Hochachse
16 - Gewindeabschnitt
17 - Stufenabsatz
18 - Lagerabschnitt
19 - Kopf zu 14
20 - Oberseite zu 9
21 - Öffnung
22 - Spannmittel
23 - innerer Sicherungsring
24 - Nut
25 - innere Lagerhülse
26 - äußere Lagerhülse
27 - Kragen zu 25
D - Drehbewegung
D9 - Dicke zu 9
D26 - Dicke zu 26
L18 - Länge zu 18
L25 - Länge zu 25
S - Schwenkbewegung

## Patentansprüche

1. Ringschraube (1) zum Befestigen an einer zu hebenden Last oder auf einer Ladefläche, aufweisend einen Schraubbolzen (14) und einen an dem Schraubbolzen (14) drehbar und schwenkbar gelagerten Ringkörper (2), wobei der Ringkörper (2) einen oberen Ösenabschnitt (3) und einen darunter befindlichen Koppelabschnitt (4) aufweist, wobei zwei gegenüberliegende Zapfen (7) des Ringkörpers (2) im Koppelabschnitt (4) schwenkbar in Ausnehmungen (8) einer Lagerscheibe (9) angeordnet sind und die Lagerscheibe (9) drehbar um den Schraubbolzen (14) gelagert ist, **dadurch gekennzeichnet, dass** ein äußerer Sicherungsring (10) in einer Unterseite (12) der Lagerscheibe (9) formschlüssig eingesetzt ist, dergestalt, dass die Zapfen (7) des Ringkörpers (2) von dem Sicherungsring (10) in den Ausnehmungen (8) gehalten sind.

2. Ringschraube (1) nach Anspruch 1, **dadurch gekennzeichnet, dass** ein innerer Sicherungsring (23) formschlüssig in eine umlaufende Nut (24) des Schraubbolzens (14) eingreift und die Lagerscheibe (9) zwischen einem Kopf (19) des Schraubbolzens (14) und Sicherungsring (23) drehbar gelagert ist.

3. Ringschraube (1) nach Anspruch 1 oder 2, **dadurch gekennzeichnet, dass** der Schraubbolzen (14) einen oberen Lagerabschnitt (18) und einen darunter befindlichen Gewindeabschnitt (16) aufweist.

4. Ringschraube (1) nach einem der vorherigen Ansprüche, **dadurch gekennzeichnet, dass** der Schraubbolzen (14) einen tellerförmigen Kopf (19) aufweist, welcher die Lagerscheibe (9) zumindest teilweise in Radialrichtung übergreift.

5. Ringschraube (1) nach einem der vorherigen Ansprüche, **dadurch gekennzeichnet, dass** die Lagerscheibe (9) zweiteilig ausgebildet ist, wobei eine innere Lagerhülse (25) von dem Schraubbolzen (14) durchgriffen ist und mit einem oberen Kragen (27) eine äußere Lagerhülse (26) überdeckt, wobei die innere Lagerhülse (25) die äußere Lagerhülse (26) durchgreift, dergestalt, dass die äußere Lagerhülse (26) drehbar auf der inneren Lagerhülse (25) gelagert ist.

6. Ringschraube (1) nach Anspruch 5, **dadurch gekennzeichnet, dass** ein innerer Sicherungsring (23) die äußere Lagerhülse (26) formschlüssig auf der inneren Lagerhülse (25) hält.

7. Ringschraube (1) nach einem der vorherigen Ansprüche, **dadurch gekennzeichnet, dass** der innere Sicherungsring (23) und/oder der äußere Sicherungsring (10) Sprengringe sind.

8. Ringschraube (1) nach einem der vorherigen Ansprüche, **dadurch gekennzeichnet, dass** eine axiale Erstreckung des oberen Lagerabschnittes (18) oder eine axiale Erstreckung der inneren Lagerhülse (25) größer ist, als die Dicke (D9) der Lagerscheibe (9) oder die Dicke (D26) der äußeren Lagerhülse (26).

9. Ringschraube (1) nach einem der vorherigen Ansprüche, **dadurch gekennzeichnet, dass** in einem Randbereich der Ausnehmungen (8) ein Spannmittel (22) eingesetzt ist, welches eine Spannkraft auf die Zapfen (7) ausübt, dergestalt, dass der Ringkörper (2) in einer jeweiligen Montageposition verbleibt.

10. Ringschraube (1) nach einem der vorherigen Ansprüche, **dadurch gekennzeichnet, dass** eine die Lagerscheibe (9) durchgreifende Öffnung (21) sich von einer Ausnehmung (8) zu dem tellerförmigen Kopf erstreckt, wobei in der Ausnehmung (8) ein Spannmittel (22), insbesondere eine Schraubendruckfeder angeordnet ist.

## Claims

1. Vertebral screw (1) for fastening to a load to be lifted or to a loading surface, having a screw bolt (14) and an annular body (2) mounted on the screw bolt (14) so as to be rotatable and pivotable, wherein the annular body (2) has an upper eyelet section (3) and a coupling section (4) located below it, wherein two oppositely-situated pins (7) of the annular body (2) are arranged in the coupling section (4) so as to be pivotable into recesses (8) of a bearing plate (9) and the bearing plate (9) is mounted so as to be rotational about the screw bolt (14), **characterised in that** an outer safety ring (10) is set form-fittingly into a lower side (12) of the bearing plate (9) such that the pins (7) of the annular body (2) are held in the recesses (8) by the safety ring (10).

2. Vertebral screw (1) according to claim 1, **characterised in that** an inner safety ring (23) engages form-fittingly in a circumferential groove (24) of the screw bolt (14) and the bearing plate (9) is rotationally mounted between a head (19) of the screw bolt (14) and safety ring (23).

3. Vertebral screw (1) according to claim 1 or 2, **characterised in that** the screw bolt (14) has an upper bearing section (18) and a thread section (16) located below it.

4. Vertebral screw (1) according to any of the preceding claims, **characterised in that** the screw bolt (14) has a plate-shaped head (19) which engages over the bearing plate (9) at least partially in radial direction.

5. Vertebral screw (1) according to any of the preceding claims, **characterised in that** the bearing plate (9) is two-part in design, wherein an inner bearing sleeve (25) is engaged through by the screw bolt (14) and covers an outer bearing sleeve (26) with an upper collar (27), wherein the inner bearing sleeve (25) engages through the outer bearing sleeve (26) such that the outer bearing sleeve (26) is mounted rotationally on the inner bearing sleeve (25).

6. Vertebral screw (1) according to claim 5, **characterised in that** an inner safety ring (23) holds the outer bearing sleeve (26) form-fittingly on the inner bearing sleeve (25).

7. Vertebral screw (1) according to any of the preceding claims, **characterised in that** the inner safety ring (23) and/or the outer safety ring (10) are snap rings.

8. Vertebral screw (1) according to any of the preceding claims, **characterised in that** an axial extension of the upper bearing section (18) or an axial extension of the inner bearing sleeve (25) is greater than the thickness (D9) of the bearing plate (9) or the thickness (D26) of the outer bearing sleeve (26).

9. Vertebral screw (1) according to any of the preceding claims, **characterised in that** in an edge region of the recesses (8) is inserted a clamping means (22) which exerts a clamping force on the pins (7) such that the annular body (2) remains in a respective mounting position.

10. Vertebral screw (1) according to any of the preceding claims, **characterised in that** an opening (21) engaging through the bearing plate (9) extends from a recess (8) to the plate-shaped head, wherein a clamping means (22), in particular a helical compression spring, is arranged in the recess (8).

## Revendications

1. Anneau de levage (1) pour la fixation à une charge à soulever ou sur une surface de chargement, présentant un boulon fileté (14) et un corps annulaire (2) monté de manière rotative et pivotante sur le boulon fileté (14), dans lequel le corps annulaire (2) présente une section d'œillet supérieure (3) et une section d'accouplement (4) située en dessous, dans lequel deux tourillons (7) opposés du corps annulaire (2) dans la section d'accouplement (4) sont disposés de manière pivotante dans des évidements (8) d'une rondelle de palier (9) et la rondelle de palier (9) est montée de manière rotative autour du boulon fileté (14), **caractérisé en ce qu'**un circlip extérieur (10) est inséré par liaison de forme dans une face inférieure (12) de la rondelle de palier (9) de telle sorte que les tourillons (7) du corps annulaire (2) sont maintenus par le circlip (10) dans les évidements (8).

2. Anneau de levage (1) selon la revendication 1, **caractérisé en ce qu'**un circlip intérieur (23) vient en prise par liaison de forme dans une rainure circonférentielle (24) du boulon fileté (14) et la rondelle de palier (9) est montée de manière rotative entre une tête (19) du boulon fileté (14) et le circlip (23).

3. Anneau de levage (1) selon la revendication 1 ou 2, **caractérisé en ce que** le boulon fileté (14) présente une section de palier supérieure (18) et une section filetée (16) située en dessous.

4. Anneau de levage (1) selon l'une quelconque des revendications précédentes, **caractérisé en ce que** le boulon fileté (14) présente une tête (19) en forme d'assiette qui recouvre au moins partiellement la rondelle de palier (9) dans la direction radiale.

5. Anneau de levage (1) selon l'une quelconque des revendications précédentes, **caractérisé en ce que** la rondelle de palier (9) est réalisée en deux parties, dans lequel une douille de palier intérieure (25) est traversée par le boulon fileté (14) et recouvre une douille de palier extérieure (26) avec un collet supérieur (27), dans lequel la douille de palier intérieure (25) traverse la douille de palier extérieure (26) de telle sorte que la douille de palier extérieure (26) est montée de manière rotative sur la douille de palier intérieure (25).

6. Anneau de levage (1) selon la revendication 5, **caractérisé en ce qu'**un circlip intérieur (23) maintient la douille de palier extérieure (26) par liaison de forme sur la douille de palier intérieure (25).

7. Anneau de levage (1) selon l'une quelconque des revendications précédentes, **caractérisé en ce que** le circlip intérieur (23) et/ou le circlip extérieur (10) sont des bagues d'arrêt.

8. Anneau de levage (1) selon l'une quelconque des revendications précédentes, **caractérisé en ce qu'**une extension axiale de la section de palier supérieure (18) ou une extension axiale de la douille de palier intérieure (25) est supérieure à l'épaisseur (D9) de la rondelle de palier (9) ou à l'épaisseur (D26) de la douille de palier extérieure (26).

9. Anneau de levage (1) selon l'une quelconque des revendications précédentes, **caractérisé en ce que**, dans une zone de bord des évidements (8), est inséré un moyen de serrage (22) qui exerce une force de serrage sur les tourillons (7) de telle sorte que le corps annulaire (2) reste dans une position de montage respective.

10. Anneau de levage (1) selon l'une quelconque des revendications précédentes, **caractérisé en ce qu'**une ouverture (21) traversant la rondelle de palier (9) s'étend depuis un évidement (8) jusqu'à la tête en forme d'assiette, dans lequel un moyen de serrage (22), en particulier un ressort de compression hélicoïdal, est disposé dans l'évidement (8).
